Europäisches Patentamt

European Patent Office

Office européen des brevets

(19)

(11) Veröffentlichungsnummer: **0 235 626 B1**

(12) **EUROPÄISCHE PATENTSCHRIFT**

(45) Veröffentlichungstag der Patentschrift: **19.06.91**       (51) Int. Cl.5: **C12G 3/08**

(21) Anmeldenummer: **87101877.6**

(22) Anmeldetag: **11.02.87**

(54) **Verfahren zur Herstellung von Hefeweissbier mit einem Alkoholgehalt unter 0,5% v/v.**

(30) Priorität: **27.02.86 DE 3606450**

(43) Veröffentlichungstag der Anmeldung:
**09.09.87 Patentblatt 87/37**

(45) Bekanntmachung des Hinweises auf die
Patenterteilung:
**19.06.91 Patentblatt 91/25**

(84) Benannte Vertragsstaaten:
**AT BE CH DE ES FR GB GR IT LI LU NL SE**

(56) Entgegenhaltungen:
**EP-A- 0 151 668**
**GB-A- 135 785**
**GB-A- 2 112 619**
**US-A- 1 337 027**

(73) Patentinhaber: **Paulaner-Salvator-Thomasbräu**
**AG**
**Hochstrasse 75**
**W-8000 München 90(DE)**

(72) Erfinder: **Schedl, Siegfried**
**Hochstrasse 75**
**W-8000 München 90(DE)**
Erfinder: **Eppinger, Hermann, Dr.**
**Hochstrasse 85**
**W-8000 München 90(DE)**
Erfinder: **Schuler, Volker**
**Hochstrasse 75**
**W-8000 München 90(DE)**

(74) Vertreter: **Huber, Bernhard, Dipl.-Chem. et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**W-8000 München 86(DE)**

## Beschreibung

Die Erfindung betrifft ein Verfahren zur Herstellung von alkoholfreiem Hefeweißbier.

Hefeweißbier ist ein verbreitetes alkoholhaltiges Bier, welches nach der Weißbierherstellungsmethode gewonnen wird und durch suspendierte Hefe sichtbar getrübt ist. Da generell der Bedarf an alkoholfreien Bieren, d.h. Bieren, welche weniger als 0,50 Vol.-% Alkohol enthalten, zunimmt, besteht auch ein Bedarf nach einem Verfahren, welches die Herstellung eines typischen Hefeweißbiers ohne Alkoholgehalt im Sinne der vorstehenden Definition ermöglicht.

Bekannt ist es, normal vergorene Biere durch Destillation im Vakuum von Alkohol zu befreien und den Rückstand zu karbonisieren. Bei diesem Verfahren bestand bereits das Problem, daß die erhaltenen Biere geschmacklich wenig befriedigten. Da Hefeweißbier durch seine charakteristische Geschmacksnuance, die wesentlich auch durch den Hefegehalt bedingt wird, charakterisiert ist, läßt sich durch einfache Vakuumdestillation des Alkohols kein Produkt erhalten, welches in geschmacklicher Hinsicht immer noch als typisches Hefeweißbier angesprochen werden können.

Der Erfindung liegt daher die Aufgabe zugrunde, dieses Problem zu lösen und ein Verfahren zur Herstellung eines alkoholfreien Hefeweißbiers zu schaffen, welches die typischen Geschmackseigenschaften des normalen Hefeweißbiers aufweist.

Diese Aufgabe wird erfindungsgemäß gelöst durch ein Verfahren zur Herstellung von alkoholfreiem Hefeweißbier unter Anwendung der Vakuumdestillation, welches dadurch gekennzeichnet ist, daß man

1. aus einem keine gärfähigen Substanzen mehr enthaltenden alkoholhaltigen Hefeweißbier die Hefe physikalisch abtrennt, danach

2. einer Vakuumdestillation unterwirft, bis der Alkoholgehalt unter 0,5 V/V abgesunken ist, dann

3. den bei der Vakuumdestillation aufgetretenen Wasserverlust durch Zusatz einer entsprechenden Menge an sauerstoffreiem, kohlensäurehaltigem Wasser ausgleicht,

4. anschließend obergärige Brauereihefe in einer über dem Gehalt von üblichem Hefeweißbier liegenden Menge zusetzt, danach

5. das Produkt bei 0 bis 10°C ruhen läßt, anschließend

6. die Hefe erneut physikalisch abtrennt und danach

7. die im Endprodukt gewünschte Menge an Hefe und $CO_2$ zusetzt.

Das erfindungsgemäße Verfahren geht aus von einem in üblicher Weise hergestellten alkoholhaltigen Hefeweißbier. Hierbei wird Gersten- und Weizenmalz einem normalen Sudverfahren unterworfen und anschließend mit normaler Obergärung ein Jungbier gewonnen, welches nach Zusatz von Kräusen einer Reifungsphase bei ca. 10°C und nach dem Abbau des Diacetyls einer Kaltlagerphase von mindestens 2 Wochen bei etwa 0°C unterzogen wird. Der aufgesetzte Spundungsdruck wird dabei vorzugsweise so eingestellt, daß der Kohlensäuregehalt nicht zu hoch wird, sondern bei etwa 0,3 bis 0,6 % liegt. Zur Herstellung von Hefeweißbier allgemein siehe L. Narziß, Technologie der Bierbereitung, Bd. 2, Enke-Verlag Stuttgart.

Ein derart gereiftes und gelagertes Hefeweißbier wird nun von der dispergierten Hefe befreit, was physikalisch beispielsweise durch Filtrieren oder Zentrifugieren erfolgen kann. Gut bewährt hat sich das Filtrieren über grobe Kieselgur.

Das so vorbehandelte Hefeweißbier wird anschließend einer Vakuumdestillation unterworfen. Bewährt haben sich Temperaturen zwischen 38 und 48°C und dem entsprechenden Unterdruck, bevorzugt erfolgt die Vakuumdestillation bei 42 bis 44°C und einem entsprechenden Druck von 0,06 bis 0,1 bar abs.. Besonders bevorzugt wird diese Vakuumdestillation in einer Vakuumzentrifuge mit beheiztem Mantel durchgeführt.

In diesem Verfahrensschritt verdampft der Alkohol des Bieres fast vollständig zusammen mit einer gewissen Menge Wasser. Man erhält ein Bierkonzentrat, dessen Alkoholgehalt zwischen etwa 0,30 und 0,48 % V/V liegt.

Dem so erhaltenen Bierkonzentrat, welches vorzugsweise gekühlt wird, setzt man sauerstofffreies, kohlensäurehaltiges Wasser in einer Menge zu, die dem abdestillierten Flüssigkeitsvolumen im zweiten Schritt entspricht. Vorzugsweise verwendet man entgastes und karbonisiertes Brauwasser. Die erforderliche Menge liegt im allgemeinen bei etwa 25 bis 30 Vol.-%. Der $CO_2$-Gehalt des Zusatzes liegt zweckmäßig zwischen etwa 0,4 und 0,8 Gew.-%.

Gemäß einer bevorzugten Ausführungsform der Erfindung wird dem so erhaltenen Produkt eine gewissen Menge an Aktivkohle zugesetzt, zweckmäßig in Form einer Suspension. Die Aktivkohlemenge liegt vorzugsweise bei etwa 50 bis 100 g/hl, jedoch kann dieser Zusatz auch völlig weggelassen bzw. eine größere oder geringere Menge zugesetzt werden. Durch den Aktivkohle-Schritt ist es möglich, einen nach der Vakuumdestillation in Erscheinung tretenden bitteren Geschmackszug zu entfernen, falls dies gewünscht wird.

Im nächsten Schritt wird dem auf das ursprüngliche Volumen ergänzten und gegebenenfalls mit Aktivkohle versetzten Bier obergärige Hefe zugesetzt, und zwar in eine Menge, die größer ist als der Hefegehalt von üblichem Hefeweißbier. Vorzugsweise beträgt der Zusatz 1 bis 3 %, besonders bevorzugt etwa 2 %. Zweckmäßig wird die zugesetzte Hefe vorher durch Waschen sorgfältig gereinigt und von Alkoholspuren befreit.

Anschließend wird das Produkt zur Aromatisierung bei einer Temperatur von 0 bis 10°C ruhen gelassen. Vorzugsweise dauert diese Ruhephase mindestens 5 Tage. Zweckmäßig wird gleichzeitig ein geringer Überdruck angewendet, der beispielsweise zwischen 0,3 und 1 bar liegt. Während dieser Aromatisierungsbehandlung läßt man die Temperatur zweckmäßig allmählich bis zur Untergrenze des angegebenen Bereichs, d.h. bis auf etwa 0°C absinken. Als vorteilhaft hat es sich herausgestellt, gelegentlich $CO_2$ einzublasen. Hierdurch wird der Aromaaustausch beschleunigt.

Anschließend wird im nächsten Verfahrensschritt die zugesetzte Hefe erneut physikalisch abgetrennt. Für die Abtrennung gelten die oben in Zusammenhang mit dem ersten Verfahrensschritt gemachten Angaben in gleicher Weise.

In einem abschließenden Schritt wird dem so hergestellten Bier die im Endprodukt gewünschte und sortentypische Menge an Hefe und $CO_2$ zugesetzt. Im allgemeinen beträgt der Zusatz etwa 0,5 bis 1 l/hl, vorzugsweise 0,6 bis 0,8 l/hl in Form dickflüssiger Hefe. Vorzugsweise wird hierbei untergärige Hefe, verwendet, die ebenso wie die im 4. Verfahrensschritt zugesetzte obergärige Hefe vorher zur Alkoholentfernung zweckmäßig gewaschen wird.

Man erhält so ein im Aussehen und Geschmack typisches Hefeweißbier mit einem unter 0,5 % V/V abgesenkten Alkoholgehalt, welches in üblicher Weise abgefüllt, gelagert und transportiert werden kann.

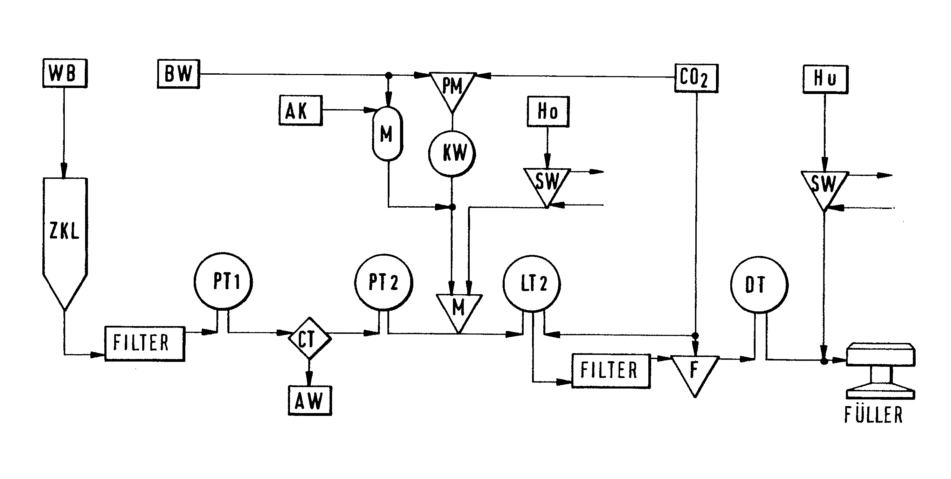

Das folgende Beispiel erläutert die Erfindung weiter in Verbindung mit der beigefügten Zeichnung, welche ein Produktionsschema für das erfindungsgemäße Verfahren zeigt.

## Beispiel

Aus einem normalen Sudverfahren mit den üblichen Anteilen an Gersten- und Weizenmalz und anschließender normaler Obergärung wird ein Jungbier gewonnen und in das Vorratsgefäß WB eingespeist. Von dort wird es in einem zylindrokonischen Tank ZKL unter Zusatz von ca. 10 bis 15 % Kräusen einer Reifungsphase bei ca. 10°C bis zum Abbau des Diacetyls und danach einer Kaltlagerphase von mindestens 2 Wochen bei 0°C unterzogen. Der Spundungsdruck wird auf etwa 0,4 bis 0,5% eingestellt.

Das erhaltene gereifte und gelagerte Weißbier wird über grobes Kieselgur filtriert und einem Puffertank PT1 zugeleitet. Die Lagertemperatur liegt um 1°C, der Druck über 2,5 bar Überdruck. Mit einer Haltezeit von weniger als einem Tag erfolgt die Weiterleitung aus dem Puffertank über die Zentrifugal-Vakuumdestillationsanlage CT (Centritherm-Anlage Typ CT 6 von ALFA-LAVAL). Die Temperatur liegt hier zwischen 35 und 50°C, der Druck bei -0,9 bar (ca. 0,1 bar abs.). Das abdestillierte azeotrope Alkohol-Wasser-Gemisch wird im Tank AW gesammelt und aus dem Verfahren ausgebracht. Das erhaltene Bierkonzentrat mit ca. 0,45 % Alkohol fließt durch einen Kühler (nicht gezeigt), in dem es auf ca. 5°C abgekühlt wird, und gelangt dann in den Puffertank PT2. Von dort wird das Bierkonzentrat in einer Mischanlage M mit Brauwasser, $CO_2$ und Aktivkohle gemischt. Hierbei wird Brauwasser im Vormischer PM entlüftet, mit $CO_2$ aus dem Behälter $CO_2$ karbonisiert und im Kohlensäurewassertank KW gelagert. Aktivkohle aus dem Vorratsgefäß AK wird mit Brauwasser im Mischtank M vermischt und in die Verbindungsleitung zwischen KW und Mischer M eingespeist. Obergärige Hefe aus dem Behälter HO gelangt über eine Sieb- und Waschvorrichtung SW ebenfalls zum Mischer. Der Zusatz an Brauwasser beträgt 25 bis 30 %, der Zusatz an $CO_2$ 0,6 %. Die zudosierte Menge an Aktivkohle beträgt etwa 75 g/hl. Der Zusatz an obergäriger Hefe beträgt etwa 2 % in Form einer dickflüssigen Suspension.

Aus dem Mischer M gelangt das Bier in den Lagertank LT2 und wird dort bei einer von 10 auf 0°C sinkenden Temperatur unter geringem Überdruck (ca. 0,5 bar) mindestens 5 Tage gelagert. Zur besseren Durchmischung wird täglich einmal $CO_2$ eingeblasen, welches ebenfalls aus dem $CO_2$-Tank entnommen wird.

Nach Beendigung der Lagerung wird das Bier aus dem Lagertank LT2 über einen Filter, der mit grober Kieselgur beschickt ist, filtriert und im Mischer F mit Kohlensäurezusatz auf 6,5 bis 8,0 g $CO_2$/hl gebracht. Das Bier gelangt weiter in den Drucktank DT und von dort zur Abfüllvorrichtung. In der Leitung zur Abfüllvorrichtung wird untergärige Hefe aus dem Tank Hu über eine Sieb- und Waschvorrichtung SW in der im Endprodukt gewünschten Menge zudosiert (ca. 0,5 bis 1 l/hl).

## Ansprüche

1. Verfahren zur Herstellung von Hefeweißbier mit einem Alkoholgehalt unter 0,5% v/v, **dadurch gekennzeichnet,** daß man

1. aus einem keine gärfähigen Substanzen mehr enthaltenden alkoholhaltigen Hefeweißbier die Hefe physikalisch abtrennt, danach

2. das alkoholhaltige Weißbier einer Vakuumdestillation unterwirft, bis der Alkoholgehalt unter 0,5 % V/V abgesunken ist, dann

3. den bei der Vakuumdestillation aufgetretenen Wasserverlust durch Zusatz einer entsprechenden Menge an sauerstofffreiem, kohlensäurehaltigem Wasser ausgleicht,

4. anschließend obergärige Brauereihefe in einer über dem Gehalt von üblichem Hefeweißbier liegenden Menge zusetzt, danach

5. das Produkt bei 0 bis 10°C ruhen läßt, anschließend

6. die Hefe erneut physikalisch abtrennt und danach

7. die im Endprodukt gewünschte Menge an Hefe und $CO_2$ zusetzt.

2. Verfahren nach Anspruch 1, **dadurch gekennzeichnet,** daß die Vakuumdestillation bei 38 bis 48°C und dem entsprechenden Unterdruck durchgeführt wird.

3. Verfahren nach Anspruch 2, **dadurch gekennzeichnet,** daß die Vakuumdestillation bei 42 bis 44°C und 0,06 bis 0,1 bar durchgeführt wird.

4. Verfahren nach einem der Ansprüche 1 bis 3, **dadurch gekennzeichnet,** daß zwischen der Vakuumdestillation und dem Wasserverlustausgleich eine Zwischenlagerung bei 0 bis 10°C erfolgt.

5. Verfahren nach Anspruch 4, **dadurch gekennzeichnet,** daß die Zwischenlagerung bei einer Temperatur um 0°C durchgeführt wird.

6. Verfahren nach einem der vorhergehenden Ansprüche, **dadurch gekennzeichnet,** daß der Wasserverlustausgleich durch entgastes Brauwasser erfolgt, welches auf 3 bis 7 g/l $CO_2$ carbonisiert ist.

7. Verfahren nach einem der vorhergehenden Ansprüche, **dadurch gekennzeichnet,** daß der Wasserverlustausgleich durch Zusatz von 25 bis 30 Vol.-% Wasser erfolgt.

8. Verfahren nach einem der vorhergehenden Ansprüche, **dadurch gekennzeichnet,** daß man im Verfahrensschritt 3 vor, während oder nach dem Wasserverlustausgleich Aktivkohle zusetzt.

9. Verfahren nach Anspruch 8, **dadurch gekennzeichnet,** daß man 50 bis 100 g/hl Aktivkohle zusetzt.

10. Verfahren nach einem der vorhergehenden Ansprüche, **dadurch gekennzeichnet,** daß man im Verfahrensschritt 4 0,4 bis 1 % V/V Hefesuspension zusetzt.

11. Verfahren nach einem der vorhergehenden Ansprüche, **dadurch gekennzeichnet,** daß man die physikalische Abtrennung der Hefe und gegebenenfalls Aktivkohle durch Filtrieren oder Zentrifugieren vornimmt.

12. Verfahren nach einem der vorhergehenden Ansprüche, **dadurch gekennzeichnet,** daß man Verfahrensschritt 5 mindestens 5 Tage durchführt.

13. Verfahren nach einem der vorhergehenden Ansprüche, **dadurch gekennzeichnet,** daß man im Verfahrensschritt 7 untergärige Hefe zusetzt.

**Claims**

1. Process for the production of yeast white beer with an alcohol content below 0.5 v/v, characterised in that one

1. physically separates the yeast from an alcohol-containing yeast white beer no longer containing any fermentable substances, thereafter

2. subjects the alcohol-containing white beer to a vacuum distillation until the alcohol content has been reduced to below 0.5% v/v, then

3. makes up the loss of water arising in the case of the vacuum distillation by adding a corresponding amount of oxygen-free, carbonic acid-containing water,

4. subsequently adds thereto top-fermented brewers' yeast in an amount lying above the content normally present in yeast white beer, thereafter

5. allows the product to stand at 0 to 10°C., subsequently

6. again physically separates off the yeast and thereafter

7. adds the amount of yeast and $CO_2$ desired in the end product.

2. Process according to claim 1, characterised in that the vacuum distillation is carried out at 38 to 48°C. and the corresponding reduced pressure.

3. Process according to claim 2, characterised in that the vacuum distillation is carried out at 42 to 44°C. and 0.06 to 0.1 bar.

4. Process according to one of claims 1 to 3, characterised in that, between the vacuum distillation and the making up of the water loss, an intermediate storage takes place at 0 to 10°C.

5. Process according to claim 4, characterised in that the intermediate storage is carried out at a temperature of 0°C.

6. Process according to one of the preceding claims, characterised in that water loss takes place by means of degassed brewery water which is carbonised to 3 to 7 g/litre of $CO_2$.

7. Process according to one of the preceding claims, characterised in that the make-up of the water loss takes place by the addition of 25 to 30 vol.% of water.

8. Process according to one of the preceding claims, characterised in that, in process step 3, one adds active charcoal during or after the make-up of the water loss.

9. Process according to claim 8, characterised in that one adds 50 to 100 g/hl. active charcoal.

10. Process according to one of the preceding claims, characterised in that one adds 0.4 to 1% v/v of yeast suspension in process step 4.

11. Process according to one of the preceding claims, characterised in that one carries out the physical separation of the yeast and possibly of the active charcoal by filtering or centrifuging.

12. Process according to one of the preceding claims, characterised in that one carries out process step 5 for at least 5 days.

13. Process according to one of the preceding claims, characterised in that, in process step 4, one adds bottom-fermented yeast.

**Revendications**

1. Procédé destiné à la fabrication de bière blanche à base de levure ayant une teneur en alcool inférieure à 0,5 % en volume, caractérisé par les étapes consistant à :

1. séparer physiquement la levure à partir d'une bière blanche à base de levure et à teneur alcoolique mais ne contenant plus de substances fermentescibles, ensuite

2. soumettre la bière à teneur alcoolique à une distillation sous vide jusqu'à ce que la teneur en alcool soit inférieure à 0,5 % en volume, ensuite

3. compenser la perte d'eau survenant lors de la distillation sous vide par addition d'une quantité correspondante d'eau exempte d'oxygène, à teneur de gaz carbonique,

4. ajouter consécutivement une levure de brasserie de fermentation haute dans une quantité supérieure à la teneur de la bière blanche à base de levure usuelle, ensuite

5. laisser le produit à reposer à 0 jusqu'à 10°C, consécutivement

6. séparer physiquement à nouveau la levure et ensuite

7. ajouter au produit final la quantité souhaitée de levure et de $CO_2$.

2. Procédé selon la revendication 1, caractérisé en ce que la distillation sous vide s'effectue à 38 jusqu'à 48°C et à la dépression correspondante.

3. Procédé selon la revendication 2, caractérisé en ce que la distillation sous vide s'effectue à 42 jusqu'à 44°C et à 0,06 jusqu'à 0,1 bar.

4. Procédé selon l'une des revendications 1 à 3, caractérisé en ce qu'entre la distillation sous vide et la compensation de perte d'eau intervient un entreposage intermédiaire à 0 jusqu'à 10°C.

5. Procédé selon la revendication 4, caractérisé en ce que l'entreposage intermédiaire s'effectue à une température de 0°C.

6. Procédé selon l'une des revendications précédentes, caractérisé en ce que la perte d'eau est compensée par de l'eau à brasser dégazée qui est carbonatée de 3 à 7 g/l de $CO_2$.

7. Procédé selon l'une des revendications précédentes, caractérisé en ce que la perte d'eau est compensée par addition de 25 à 30 % en volume d'eau.

8. Procédé selon l'une des revendications précédentes, caractérisé en ce que dans l'étape 3 du procédé on ajoute du charbon actif pendant ou après la compensation de perte d'eau.

9. Procédé selon la revendication 8, caractérisé en ce que l'on ajoute 50 à 100 g/hl de charbon actif.

10. Procédé selon l'une des revendications précédentes, caractérisé en ce qu'au cours de l'étape de procédé 4 on ajoute 0,4 à 1 % en volume de levure en suspension.

11. Procédé selon l'une des revendications précédentes, caractérisé en ce que l'on procède à la séparation physique de la levure et éventuellement du charbon actif par filtrage ou centrifugation.

12. Procédé selon l'une des revendications précédentes, caractérisé en ce que l'on effectue l'étape de procédé 5 au moins pendant 5 jours.

13. Procédé selon l'une des revendications précédentes, caractérisé en ce que dans l'étape de procédé 7 on ajoute de la levure à fermentation basse.